# EUROPÄISCHE PATENTSCHRIFT

(11) **EP 1 522 454 B1**
(45) Veröffentlichungstag und Bekanntmachung des Hinweises auf die Patenterteilung: **07.10.2009**
(21) Anmeldenummer: 04019241.1
(22) Anmeldetag: 13.08.2004
(51) Int. Cl.: B60P 3/00, G21F 9/00

(54) **Mobiles Dekontaminationssystem zum Dekontaminieren von Personen und Gegenständen**
Decontamination system for decontaminating of persons and objects
Système de décontamination mobile pour la décontamination de personnes et d'objets

(30) Priorität: 18.09.2003 DE 10345351
(43) Veröffentlichungstag der Anmeldung: 13.04.2005
(73) Patentinhaber: Kärcher Futuretech GmbH, 71364 Winnenden (DE)
(72) Erfinder: Töpfer, Hans-Joachim, 71522 Backnang (DE); Kostron, Markus, 71686 Remseck (DE); Bertsch, Otto-Karl, 71642 Ludwigsburg (DE)
(74) Vertreter: Duhme, Torsten

(56) Entgegenhaltungen:
- DE-A1- 19 821 042
- DE-U1- 20 118 752
- US-A- 4 847 928
- US-B1- 6 179 358

## Beschreibung

Die vorliegende Erfindung betrifft ein mobiles Dekontaminationssystem zum Dekontaminieren von Personen und Gegenständen, mit zumindest einem ersten und einem zweiten Dekontaminationsmodul, die jeweils Einrichtungen zum Dekontaminieren von Personen und/oder Gegenständen beinhalten, wobei die Einrichtungen des ersten Dekontaminationsmoduls in einem ersten transportablen Container und die Einrichtungen des zweiten Dekontaminationsmoduls in einem zweiten transportablen Container angeordnet sind.

Ein solches Dekontaminationssystem ist aus DE 34 32 282 A1 oder aus DE 198 21 042 A1 bekannt.

Der Begriff "Dekontaminieren" ist ein Fachterminus für die gezielte Beseitigung und/oder Unschädlichmachung von radioaktiven, biologischen oder chemischen Substanzen, die ohne derartige Maßnahmen eine Gefahr für die Gesundheit oder sogar das Leben von Personen darstellen. Derartige Substanzen können die Folge von militärischen Anwendungen radioaktiver, biologischer oder chemischer Kampfstoffe oder die Folge von entsprechenden Terroranschlägen sein. Darüber hinaus können derartige Substanzen auch infolge von zivilen Unfällen zu einer Kontamination von Personen, Gegenständen und Gebieten führen, beispielsweise bei einem Unfall in einer Chemiefabrik oder in einem Kernkraftwerk. Maßnahmen zur Dekontamination beinhalten das Entstrahlen (A-Dekontamination), das Entseuchen (B-Dekontamination) und das Entgiften (C-Dekontamination), wobei abhängig von der Art der Dekontamination unterschiedliche Dekontaminationsmittel und Vorgehensweisen zum Einsatz kommen können.

Aus der DE 34 32 282 A1 ist ein gattungsgemäßes Dekontaminationssystem bekannt, bei dem ein Container, der ein Kleiderdekontaminationsmodul enthält, zum Transport auf einem Transportfahrzeug verlastet wird. An das Fahrzeug wird ferner ein Anhänger mit einem Modul zur Personendekontamination angehängt. Des Weiteren sind hier auch Einrichtungen für eine Kleingerätedekontamination angeordnet. Um einen flexiblen Einsatz dieses Systems zu ermöglichen, wird vorgeschlagen, dass in der Ladefläche des Transportfahrzeugs ein oder mehrere faltbare Tanks angeordnet sind, um beispielsweise Wasser von einer entfernten Wasserstelle aufzunehmen. Darüber hinaus soll das Transportfahrzeug nach dem Absetzen und Aufstellen der Container auch für einen Dekontaminationsmittelnachschub genutzt werden können.

Dieses bekannte Dekontaminationssystem beinhaltet keine Einrichtungen zum Dekontaminieren von Großgerät, wie beispielsweise verstrahlten, verseuchten oder vergifteten Fahrzeugen. Für derartige Aufgaben wäre somit ein weiteres, eigenständiges System erforderlich. Darüber hinaus ist zur Verlegung des bekannten Systems stets der Transport von mehreren Einzelkomponenten erforderlich. Eine flexible Einzelnutzung der Komponenten ist jedoch nicht angedeutet.

Aus der DE 198 21 042 A1 ist ein modulares Dekontaminationssystem bekannt, das mehrere Module für unterschiedliche Dekontaminationsaufgaben beinhaltet. Insbesondere sind ein Modul zur Großgerätedekontamination, ein Modul zur Kleingerätedekontamination sowie ein Modul zur Personen- und Bekleidungsdekontamination vorgesehen. Die genannten Module können beliebig miteinander kombiniert werden, indem sie über entsprechende Kupplungsstücke miteinander und gemeinsam dann mit einem Versorgungsmodul verbunden werden. Das Versorgungsmodul beinhaltet zentral für alle angeschlossenen Dekontaminationsmodule die Einrichtungen zur Frischwasserversorgung, Abwasserversorgung, Kraftstoffversorgung und Stromversorgung.

Dieses System ermöglicht auf Grund der variabel kombinierbaren Dekontaminationsmodule eine flexible Anpassung an verschiedene Dekontaminationsaufgaben. In der Praxis kann dieses System jedoch stets nur an einem zentralen Ort genutzt werden, da der Betrieb der einzelnen Dekontaminationsmodule den Anschluss an das zentrale Versorgungsmodul erfordert. Zudem müssen auch hier stets mehrere einzelne Container transportiert werden, um das System zu einem Einsatzort zu verlegen.

DE 201 18 752 Ul offenbart eine Duschanlage zur Entfernung atomarer, biologischer und chemischer Stoffe. In diesem Fall ist ein tragender Rahmenaufbau fest auf einer Grundplatte angeordnet, die mit Hilfe üblicher Transportsysteme aufgenommen, transportiert und abgestellt werden kann. In dem Rahmenaufbau sind ein Auskleideraum, ein Duschraum und ein Ankleideraum angebracht. Des Weiteren enthält die Anlage die notwendigen technischen Aggregate für den Betrieb als Duschanlage. Andere Dekontaminationsaufgaben, wie etwa die Dekontamination von Bekleidung, militärischem Klein- oder Großgerät, sind mit der Anlage nicht möglich.

US 6,179,358 B1 offenbart ein mobiles Krankenhaus mit einer Vielzahl von Containerwagen, die mit Traktoren, Helikoptern, Lokomotiven oder Schiffen bewegt werden können. Im Betrieb werden die einzelnen Containerwagen zu einem Gesamtkomplex verbunden. Es gibt einen Wasserversorgungswagen, einen Energieerzeugungswagen, einen Treibstoffversorgungswagen, einen Wasseraufreinigungswagen, einen Abwasserbehandlungswagen sowie verschiedene Wagen mit medizinischen Behandlungsräumen, Operationsräumen, Lagerräumen und Aufenthaltsräumen. Ein separater Betrieb der einzelnen Wagen ist nur insoweit vorgesehen, als dass die medizinischen Einrichtungen jeweils eine eigene unterbrechungsfreie Ersatzstromversorgung aufweisen, um bei einem Versagen des Energieerzeugungswagens eine Notfallbehandlung zu ermöglichen.

Vor diesem Hintergrund ist es eine Aufgabe der vorliegenden Erfindung, ein mobiles Dekontaminationssystem der eingangs genannten Art anzugeben, das einerseits einen möglichst flexiblen und variablen Einsatz zur Dekontamination von Personen und unterschiedlichen Gegenständen und andererseits einen einfachen und damit schnellen Transport ermöglicht.

Diese Aufgabe wird gemäß einem Aspekt der Erfindung dadurch gelöst, dass das erste und das zweite Dekontaminationsmodul jeweils mit allen erforderlichen Einrichtungen versehen sind, die einen von den jeweils anderen Dekontaminationsmodulen unabhängigen und räumlich getrennten Arbeitsbetrieb ermöglichen, so dass sie autark arbeitsfähig sind, und dass die transportablen Container durch Verriegelungen lösbar zu einem einheitlichen, transportablen Gesamtcontainer koppelbar sind.

Die genannten Dekontaminationsmodule sind hiernach also mit allen erforderlichen Einrichtungen versehen, um einen autarken Arbeitsbetrieb, d.h. einen von den jeweils anderen Dekontaminationsmodulen unabhängigen und gegebenenfalls räumlich getrennten Arbeitsbetrieb, zu ermöglichen. Dies beinhaltet insbesondere, dass jedes Dekontaminationsmodul über alle Betriebsstoffe und Zubehörteile verfügt, die für einen solchen autarken Betrieb erforderlich sind. Dementsprechend besitzt jedes Dekontaminationsmodul beispielsweise eine eigene Energieversorgung.

Im Gegensatz zu dieser funktionalen Trennung der Dekontaminationsmodule ist andererseits vorgesehen, dass die separaten Container durch eine geeignete Kopplung zu einem einzigen Gesamtcontainer zusammengefügt werden können. Bevorzugt erfolgt eine Kopplung der Einzelcontainer über lösbare Verbindungen an den Außenwänden und/oder Außenkanten der Einzelcontainer. Letztere werden in der Terminologie der Anmelderin daher auch als Subcontainer bezeichnet.

Die Aufteilung des Gesamtsystems in autark arbeitsfähige Dekontaminationsmodule ermöglicht eine maximale Flexibilität und Variabilität beim Einsatz des Systems. Insbesondere ist es hierdurch auf einfache Weise möglich, eine Dekontamination von Großgerät räumlich entfernt von einer Personendekontamination durchzuführen. Die Auswahl geeigneter Dekontaminationsplätze vereinfacht sich, da für eine erfolgreiche Dekontamination bekanntermaßen die Windrichtung eine wesentliche Rolle spielt und für eine Gesamtdekontamination von Personen und Großgeräten sehr weiträumige Flächen gefunden werden müssten. Andererseits erlaubt es die Aufteilung des Systems in autark arbeitsfähige Dekontaminationsmodule, Einrichtungen für verschiedene Anforderungen in das System zu integrieren, beispielsweise also für die Großgerätedekontamination und Personendekontamination.

Durch die Möglichkeit, die autarken Dekontaminationsmodule zu einem Gesamtcontainer zu koppeln, vereinfacht sich andererseits der Transport, da nur ein Element verlastet und transportiert werden muss. Dies vereinfacht nicht nur einen Fahrzeugtransport, sondern beispielsweise auch eine Verlegung per Flugzeug oder Schiff.

Bislang bekannte Dekontaminationssysteme, die zur Dekontamination von Personen und verschiedenen Geräten ausgelegt sind, beruhten auf einer zumindest teilweisen gemeinsamen Nutzung von Komponenten. Diese gemeinsam genutzten Komponenten begrenzten dementsprechend die Flexibilität und Variabilität. Uneingeschränkte Flexibilität besitzen demgegenüber natürlich mehrere unabhängige Dekontaminationssysteme, die jeweils für spezielle Dekontaminationsaufgaben ausgebildet sind, beispielsweise also eigenständige Systeme zur Dekontamination von Großgerät und davon unabhängige Systeme zum Dekontaminieren von Personen. In diesen Fällen besteht jedoch bislang keine Möglichkeit, die eigenständigen Systeme zu Transportzwecken miteinander zu verbinden, so dass die flexiblen Einsatzmöglichkeiten letztlich durch den logistischen Aufwand begrenzt sind.

Das hier vorgeschlagene System geht insofern einen neuen Weg, als dass es an sich autarke Dekontaminationsmodule zu einem einheitlichen, transportablen Gesamtcontainer zusammenfügt. Das neue System ermöglicht damit bei begrenztem logistischen Aufwand eine zeitlich und örtlich voneinander unabhängige Dekontamination von Personen und Gegenständen. Dekontaminationsaufgaben können daher mit dem neuen System noch einfacher, flexibler und variabler erfüllt werden, als mit bislang bekannten Systemen.

Die genannte Aufgabe ist daher vollständig gelöst.

Die gewonnene Flexibilität wird bei dem neuen System auf den ersten Blick dadurch erkauft, dass einige Komponenten, wie beispielsweise Dekontaminationsmittelvorräte und Energieversorgungseinheiten, in dem Gesamtsystem mehrfach vorhanden sind, nämlich in jedem einzelnen Dekontaminationsmodul. Auf den ersten Blick führt dies zu einem nachteiligen Mehrgewicht des Gesamtsystems bzw. zu einer unnötigen Vergrößerung des Platzbedarfs. Eine genauere Betrachtung hat jedoch gezeigt, dass diese Nachteile bei weitem nicht so stark hervortreten, wie dies zunächst erscheinen mag, da die Dezentralisierung der an sich gemeinsam nutzbaren Betriebsmittel und Versorgungseinrichtungen tatsächlich eine optimale Raumausnutzung und Anpassung an die jeweiligen Erfordernisse ermöglicht. Darüber hinaus besitzen die verteilten Komponenten den Vorteil der Redundanz, so dass beispielsweise eine Personendekontamination auch dann noch möglich ist, wenn das Dekontaminationsmodul für Großgeräte aus welchen Gründen auch immer ausgefallen ist.

In einer Ausgestaltung der Erfindung beinhaltet das Dekontaminationssystem ein drittes Dekontaminationsmodul, wobei das erste Dekontaminationsmodul erste Einrichtungen zum Dekontaminieren von Großgeräten beinhaltet, wobei das zweite Dekontaminationsmodul zweite Einrichtungen zum Dekontaminieren von Kleingeräten beinhaltet, und wobei das dritte Dekontaminationsmodul dritte Einrichtungen zum Dekontaminieren von Personen beinhaltet.

In dieser Ausgestaltung ist das neue Dekontaminationssystem in der Lage, alle wesentlichen Dekontaminationsaufgaben effizient und zieloptimiert zu erfüllen. Die Einsatzflexibilität des Gesamtsystems ist dadurch nochmals erhöht.

In einer weiteren Ausgestaltung ist das dritte Dekontaminationsmodul in einem dritten Container angeordnet, der mit dem ersten und dem zweiten Container lösbar zu einem Gesamtcontainer koppelbar ist.

Diese Ausgestaltung setzt den bereits weiter oben erläuterten Grundgedanken der Erfindung konsequent fort. Die Aufteilung des Gesamtsystems auf drei (Sub-)Container hat sich für die praktische Realisierung dabei als eine besonders bevorzugte Variante herausgestellt, da sich die genannten Dekontaminationsmodule dann so realisieren lassen, dass der Gesamtcontainer in seinen Ausmaßen einem 20 Fuß ISO-Container entspricht. Durch die Einhaltung dieses Standardmaßes kann das neue System besonders einfach verlegt werden, insbesondere auch bei Schiffs-, Bahn- oder Flugzeugtransporten. Die Aufteilung des Gesamtcontainers in drei Subcontainer bietet innerhalb der Subcontainer noch genügend Raum, um die für einen autarken Betrieb erforderlichen Einrichtungen sinnvoll unterzubringen. Eine noch kleinere Aufteilung des Gesamtcontainers auf vier oder fünf (oder noch mehr) Subcontainer ist zwar grundsätzlich denkbar, für einen autarken Betrieb der einzelnen Dekontaminationsmodule beim derzeitigen Stand der Technik jedoch eher nachteilig.

In einer weiteren Ausgestaltung ist das dritte Dekontaminationsmodul so ausgerüstet, dass es autark arbeitsfähig ist.

Auch diese Ausgestaltung setzt den bereits weiter oben erläuterten Grundgedanken konsequent fort und knüpft dabei an die zuvor beschriebenen Vorteile an. Grundsätzlich ist es allerdings denkbar und abhängig vom Einsatzzweck durchaus auch sinnvoll, das zweite und dritte Dekontaminationsmodul zeitlich und räumlich zusammen zu betreiben, da bei der Dekontamination von Personen in aller Regel auch deren persönliche Ausrüstungsgegenstände, also Kleingeräte und Bekleidung, dekontaminiert werden müssen. Durch die autarke Auslegung des dritten Dekontaminationsmoduls ist man auf diesen Anwendungszweck jedoch nicht beschränkt und kann beispielsweise bei Vorhandensein von zwei Dekontaminationssystemen die zur Verfügung stehenden Kapazitäten optimal verteilen. Darüber hinaus ist es beispielsweise bei Einsätzen im Rahmen des Zivilschutzes von Vorteil, wenn Kleingeräte und Personen unabhängig voneinander dekontaminiert werden können.

In einer weiteren Ausgestaltung besitzt das Dekontaminationssystem ein Transportfahrzeug, das zum Transport des Gesamtcontainers ausgebildet ist.

Durch diese Ausgestaltung wird das neue Dekontaminationssystem hoch mobil. Einsätze können daher noch flexibler und effizienter durchgeführt werden. Die Eigenmobilität des Gesamtsystems führt dazu, dass Einsätze schneller und ortsnäher durchgeführt werden können.

In einer weiteren Ausgestaltung besitzt das Transportfahrzeug eine Kranvorrichtung, die dazu ausgebildet ist, die transportablen Container vom Transportfahrzeug ab- bzw. auf das Transportfahrzeug aufzusetzen.

Durch diese Ausgestaltung wird die Mobilität des Gesamtsystems noch weiter erhöht, da die autark arbeitsfähigen Dekontaminationsmodule hierdurch ohne zusätzliches Hebewerkzeug an ihren jeweiligen Einsatzort verbracht werden können. Alternativ zu einer Kranvorrichtung könnte dies grundsätzlich auch dadurch erreicht werden, dass die einzelnen (Sub-)Container eigene, absenkbare Tragstempel besitzen. Eine am Transportfahrzeug angeordnete Kranvorrichtung kann demgegenüber jedoch flexibler eingesetzt werden. Zudem lässt sich in der bevorzugten Ausgestaltung eine Gewichtseinsparung erreichen, die der Mobilität des Gesamtsystems zugute kommt.

In einer weiteren Ausgestaltung beinhaltet die Kranvorrichtung einen Personenträger, so dass Personen mit Hilfe der Kranvorrichtung in eine erhöhte Arbeitsposition bringbar sind. Besonders bevorzugt ist es, wenn der Personenträger, beispielsweise in Form eines Personenkorbes, lösbar am freien Ende der Kranvorrichtung befestigt werden kann.

Durch diese Ausgestaltung wird die Flexibilität und Effizienz des Gesamtsystems noch weiter gesteigert. Das Anordnen eines Personenträgers an der Kranvorrichtung ermöglicht es nämlich, dass insbesondere Großgerät, aber auch Gebäude oder anderweitige Infrastruktur, sehr effizient auch von weit oben dekontaminiert werden können. Alternativ hierzu wurden derartige Dekontaminationen bislang von eigenen Hebebühnen oder Gerüsten aus durchgeführt. Derartige Ausrüstungen führen jedoch zu einem erhöhten Raumbedarf und zu einem höheren Gesamtgewicht des Systems, was dessen Mobilität und Flexibilität beeinträchtigt. Durch die hier vorgeschlagene Doppelnutzung der Kranvorrichtung als "Hebebühne" für das Personal, das die Dekontamination bei Großgerät durchführt, kann die Mobilität des Gesamtsystems besonders wirkungsvoll gesteigert werden.

In einer weiteren Ausgestaltung besitzt das Transportfahrzeug eine Sprühvorrichtung zum Besprühen eines Untergrundes, wobei zumindest eines der Dekontaminationsmodule dazu ausgebildet ist, die Sprühvorrichtung mit Dekontaminationsmittel zu versorgen.

Durch diese Ausgestaltung werden die Einsatzmöglichkeiten des neuen Dekontaminationssystems noch weiter gesteigert, da so auf einfache Weise eine Geländedekontamination möglich ist. Da eine Geländedekontamination vorteilhafterweise mit einem Fahrzeug durchgeführt wird, ist es jedoch nicht erforderlich, einen eigenen, autark arbeitsfähigen Container für diesen Zweck bereitzustellen. Statt dessen wird die Erweiterung des Einsatzspektrums sehr effiziente Weise durch die genannte Ausbildung eines der vorhandenen Dekontaminationsmodule erreicht.

Besonders bevorzugt ist es dabei, wenn das erste Dekontaminationsmodul zum Anschluss an die Sprühvorrichtung ausgebildet ist, da dieses auf Grund seiner Auslegung zum Dekontaminieren von Großgerät die größten Kapazitäten an Dekontaminationsmittel besitzt. Darüber hinaus ist eine Dekontamination von Geländeabschnitten häufig auch mit einer Dekontamination von Großgeräten und/oder Infrastruktur verbunden, so dass der erste Container entsprechend benötigt wird. Die Flexibilität des Systems wird also trotz großer Synergieeffekte kaum beeinträchtigt.

In einer weiteren Ausgestaltung beinhaltet das Dekontaminationssystem ein viertes Dekontaminationsmodul, das vorzugsweise zum autarken Dekontaminieren von Innenräumen ausgebildet ist, wobei zumindest einer der Container dazu ausgebildet ist, das vierte Dekontaminationsmodul zu Transportzwecken aufzunehmen.

Durch diese Ausgestaltung wird das Einsatzspektrum des neuen Dekontaminationssystems weiter vervollständigt. Das neue Dekontaminationssystem ist damit für praktisch alle Einsatzzwecke ausgerüstet. Da zum Dekontaminieren von Innenräumen vergleichsweise kleine Einheiten von Vorteil sind (teilweise mit speziellen Dekontaminationsfunktionen, wie etwa eine Sprüh-/Saugeinheit), ist es von Vorteil, für das vierte Dekontaminationsmodul keinen eigenen Container vorzusehen. Statt dessen kann der im Betrieb eines der anderen Dekontaminationsmodule benötigte Platz für den Bediener als Transport- und Lagerfläche für das vierte Dekontaminationsmodul genutzt werden. In dieser bevorzugten Ausgestaltung wird der insgesamt zur Verfügung stehende Raum optimal genutzt, während gleichzeitig eine maximale Einsatzflexibilität erreicht wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Darstellung eines bevorzugten Ausführungsbeispiels des neuen Dekontaminationssystems in seinem Transportzustand;
- Fig. 2: das Dekontaminationssystem aus Fig. 1 beim Absetzen einzelner Dekontaminationsmodule;
- Fig. 3: das Dekontaminationssystem aus Fig. 1 beim Absetzen eines nicht-containerisierten, vierten Dekontaminationsmoduls;
- Fig. 4: das Dekontaminationssystem aus Fig. 1 beim Dekontaminieren von Großgerät;
- Fig. 5: ein Dekontaminationsmodul des Systems aus Fig. 1 zum Dekontaminieren von Kleingeräten und Bekleidung;
- Fig. 6: ein drittes Dekontaminationsmodul des Systems aus Fig. 1 zum Dekontaminieren von Personen;
- Fig. 7: die Dekontaminationsmodule aus Fig. 5 und 6 in einem kombinierten Einsatz; und
- Fig. 8: das Dekontaminationssystem aus Fig. 1 beim Dekontaminieren einer Straße.

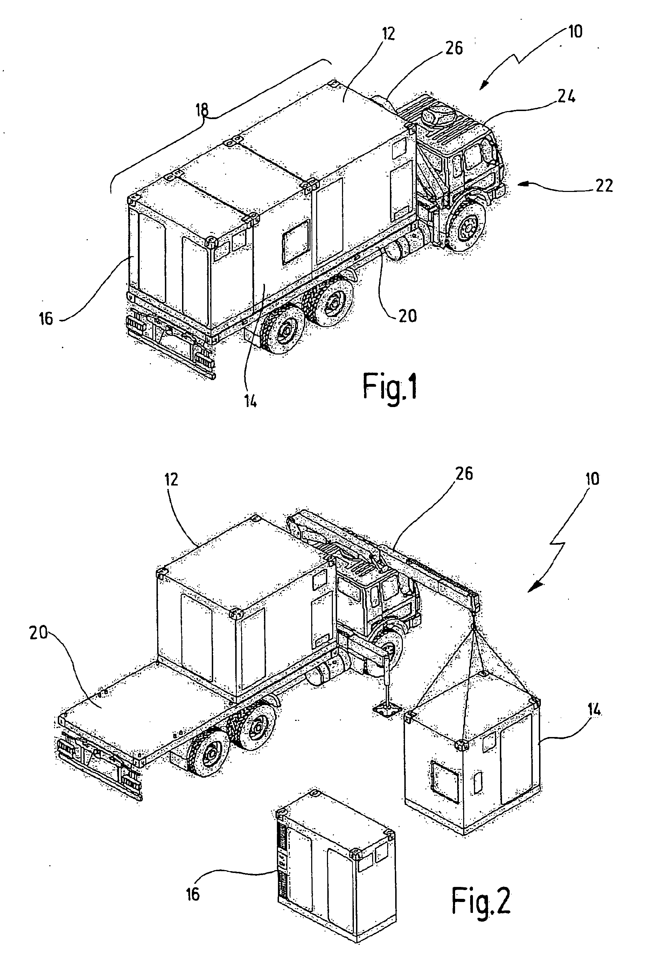

In Fig. 1 ist ein Ausführungsbeispiel des neuen Dekontaminationssystems in seiner Gesamtheit mit Bezugsziffer 10 bezeichnet.

Das Dekontaminationssystem 10 besitzt hier drei einzelne Container 12, 14, 16, die gemäß der vorliegenden Erfindung zu einem Gesamtcontainer 18 lösbar miteinander verbunden sind. Die Verbindung der einzelnen Container 12, 14, 16 zu dem Gesamtcontainer 18 durch Verriegelungen erfolgt, wie sie z.B. in FR 2 732 313 A1 beschrieben sind. Im verriegelten Zustand lässt sich der Gesamtcontainer 18 wie eine einzige Einheit handhaben, und er besitzt in dem bevorzugten Ausführungsbeispiel exakt dieselben Außenabmessungen, wie ein 20 Fuß ISO-Container (Länge x Breite x Höhe: 6.058 mm x 2.438 mm x 2.438 mm).

Der Gesamtcontainer 18 ist über eine Plattform 20 für übliche 20 Fuß ISO-Container auf einem Transportfahrzeug 22 befestigt. Bei dem Transportfahrzeug 22 handelt es sich hier um einen Allrad-getriebenen, geländegängigen Lastkraftwagen. Hinter der Fahrerkabine 24 des Lastkraftwagens ist eine Kranvorrichtung 26 angeordnet, mit der die einzelnen Container 12, 14, 16 vom Transportfahrzeug 22 abgesetzt bzw. auf dieses aufgeladen werden können. Dabei ist, wie in Fig. 2 gezeigt, kein externes Hebewerkzeug erforderlich.

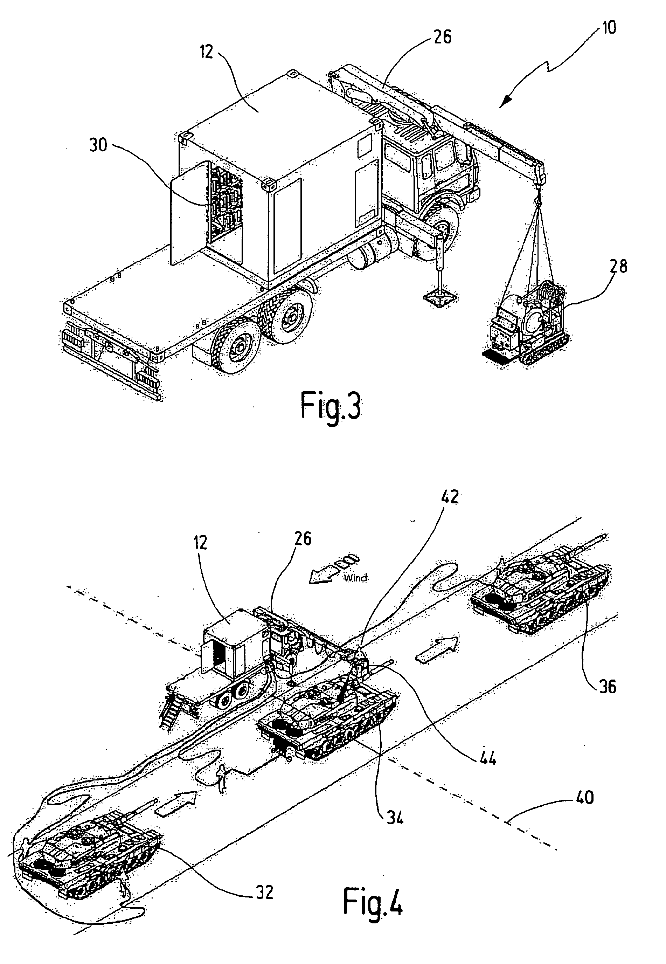

Das bevorzugte Dekontaminationssystem 10 besitzt zudem noch ein viertes, nicht-containerisiertes Dekontaminationsmodul 28 (Fig. 3). Das Dekontaminationsmodul 28 dient in dem bevorzugten Ausführungsbeispiel zur Dekontamination von Innenräumen von Fahrzeugen oder Gebäuden. Beispielsweise handelt es sich um ein Modul, das von der Anmelderin der vorliegenden Erfindung unter der Bezeichnung *Decont Shuttle* angeboten wird. Zum Transport wird das Dekontaminationsmodul 28 in dem Container 12 untergebracht, so dass es keinen zusätzlichen Platz des Gesamtcontainers 18 beansprucht.

Mit der Bezugsziffer 30 sind Einrichtungen bezeichnet, die in dem Container 12 angeordnet sind. Hierbei handelt es sich insbesondere um ein Hochdruckreinigungsmodul, ein Hochdruckdekontaminationsmodul, ein Applikationsmodul für nichtwässrige Dekontaminationsmittel, eine Dieselmotorpumpe, ein Stromerzeugungsaggregat sowie einen Wassertank. Des Weiteren gehören hierzu Schläuche, Sprühpistolen und weiteres Zubehör, das zur Dekontamination benötigt wird.

In dem bevorzugten Ausführungsbeispiel beinhaltet der Container 12 sämtliche Einrichtungen, die zur Dekontamination von Großgeräten benötigt werden. Der Container 12 wird daher im Folgenden auch als erstes Dekontaminationsmodul zum Dekontaminieren von Großgerät bezeichnet.

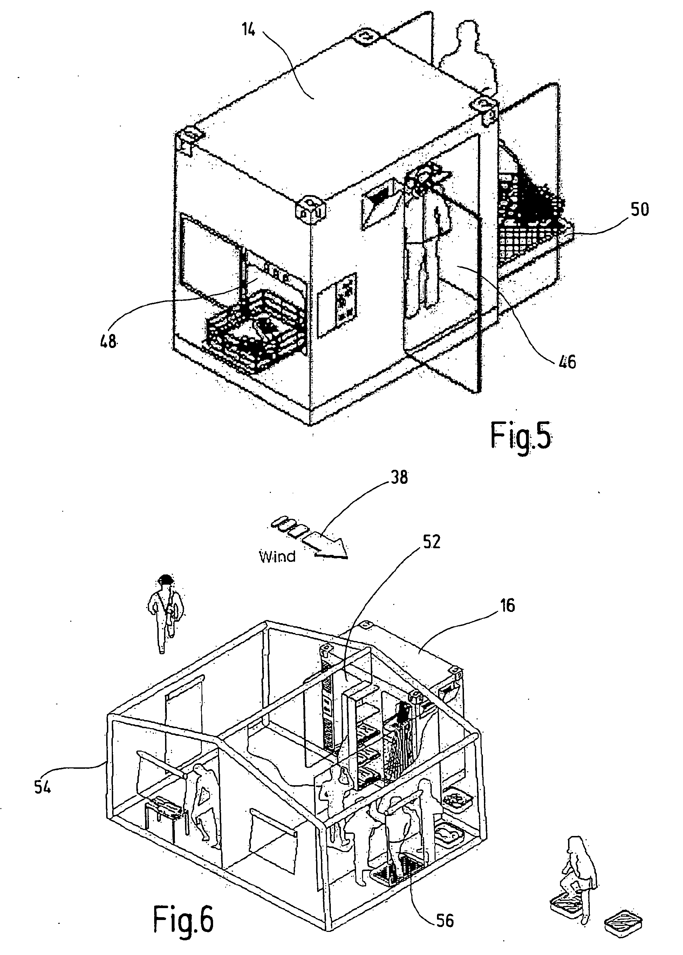

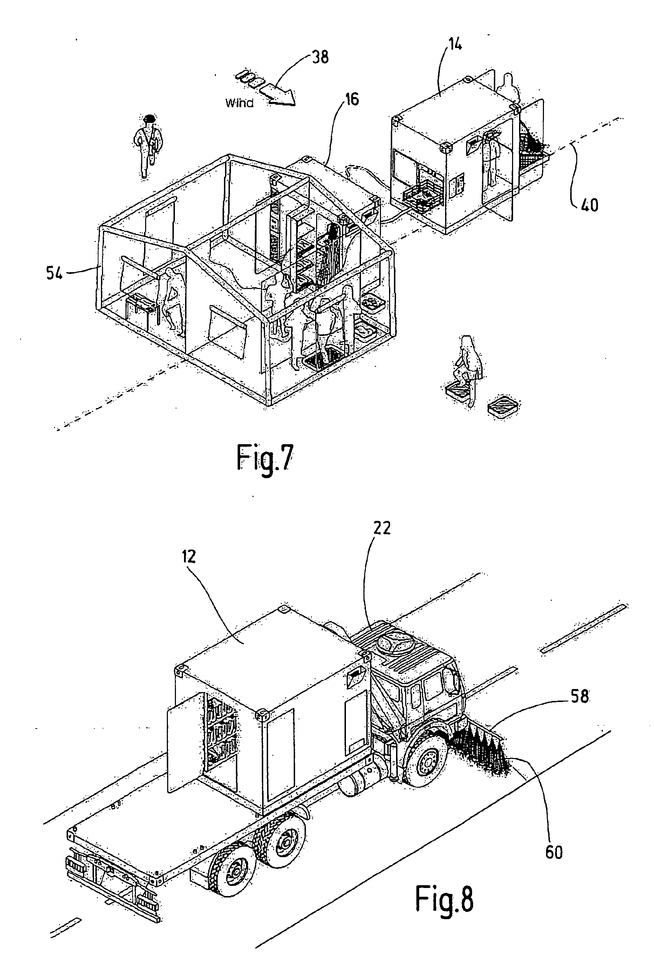

Der Container 14 beinhaltet in entsprechender Weise Einrichtungen (vgl. Fig. 5 und 7), die zum Dekontaminieren von kleineren Geräten, wie persönlichen Ausrüstungsgegenständen, und zur Dekontamination von Bekleidung vorgesehen sind. Der zweite Container 14 wird nachfolgend auch als zweites Dekontaminationsmodul bezeichnet.

Der dritte Container 16 beinhaltet in dem bevorzugten Ausführungsbeispiel sämtliche Einrichtungen (vgl. Fig. 6 und 7), die zum Dekontaminieren von Personen benötigt werden. Der dritte Container 16 wird daher nachfolgend auch als drittes Dekontaminationsmodul bezeichnet. Sämtliche Dekontaminationsmodule 12, 14, 16 und 28 sind in dem bevorzugten Ausführungsbeispiel der Erfindung autark betriebsfähig, wie dies an Hand der nachfolgenden Figuren näher erläutert wird.

Fig. 4 zeigt einen beispielhaften Einsatz des ersten Dekontaminationsmoduls 12 zum Dekontaminieren von Panzern 32, 34, 36. Die Dekontamination muss bekanntermaßen entgegen der Windrichtung erfolgen, was durch einen Pfeil 38 angedeutet ist. Eine Trennlinie 40 trennt andeutungsweise den "schwarzen" Bereich (Gefährdungsbereich, in dem noch nicht dekontaminiertes Material von Personal in vollständigem ABC-Schutz gehandhabt wird) von dem "weißen" Bereich (in dem bereits dekontaminiertes Material von Personal ohne ABC-Vollschutz gehandhabt wird).

Wie in Fig. 4 dargestellt, wird das erste Dekontaminationsmodul 12 in dem bevorzugten Ausführungsbeispiel auf dem Transportfahrzeug 22 verwendet. Dies ist jedoch nicht erforderlich. Statt dessen kann das Dekontaminationsmodul 12 auch abgesetzt vom Transportfahrzeug 22 verwendet werden. Die Dekontamination erfolgt in an sich bekannter Weise mit den Schritten Vorbehandlung, Hauptbehandlung und Nachbehandlung, wobei in der Vorbehandlung zunächst grober Schmutz entfernt wird und in der Hauptbehandlung das eigentliche Dekontaminationsmittel aufgebracht wird. Je nach verwendetem Dekontaminationsmittel ist eine Einwirkzeit erforderlich, nach der anschließend im dritten Schritt das Dekontaminationsmittel sowie Dekontaminationsprodukte entfernt werden (vgl. Panzer 36).

Gemäß einem besonders bevorzugten Ausführungsbeispiel wird die Kranvorrichtung 26 beim Dekontaminieren von Großgerät auch als "Hebebühne" für eine Person 42 verwendet, die die Dekontamination durchführt. Vorteilhafterweise ist die Kranvorrichtung 26 dabei an ihrem freien Ende mit einem Personenkorb 44 versehen, in dem die Person 42 sicher stehen kann. Nach Abschluss der Dekontamination kann der Personenkorb 44 von der Kranvorrichtung 26 abgenommen werden, so dass die Kranvorrichtung 26 wieder als Lasthebewerkzeug für die Container 12 bis 16 zur Verfügung steht (vgl. Fig. 2).

Die in Fig. 4 gezeigte Dekontamination von Panzern 32 bis 36 ist hier beispielhaft zu verstehen. Das Dekontaminationsmodul 12 kann gleichermaßen auch zur Dekontamination von anderem Großgerät, beispielsweise zur Dekontamination von Luftfahrzeugen oder auch zur Dekontamination von Gebäuden, verwendet werden.

Das zweite Dekontaminationsmodul 14 beinhaltet in dem bevorzugten Ausführungsbeispiel eine Heißgas-/Heißdampf-Dekontaminationsvorrichtung 46 zum Dekontaminieren von persönlicher Ausrüstung sowie eine Vakuumdekontaminationsvorrichtung 48 zum Dekontaminieren von empfindlichen Kleingeräten, wie beispielsweise Funkgeräten oder Ferngläsern. Außerdem ist auf einer Seite des Containers 12 eine abklappbare Wanne 50 zur Dekontamination von Waffen oder sonstigem Material angeordnet. Des Weiteren besitzt das Dekontaminationsmodul 14 eine integrierte Energieversorgung sowie einen Tank zur Aufnahme des Dekontaminationsmittels (hier nicht dargestellt).

Das dritte Dekontaminationsmodul 16 beinhaltet gemäß Fig. 6 eine Duschsektion 52 sowie ein faltbares Aus- und Ankleidezelt 54. Außerdem gehört weiteres Zubehör dazu, beispielsweise Fußwannen 56, wie dies zur Dekontamination von Personen üblich ist.

Wie in Fig. 7 dargestellt, können die Dekontaminationsmodule 14 und 16 in räumlicher Nähe zueinander eingesetzt werden, da bei der Dekontamination von militärischem Personal in aller Regel auch deren persönliche Ausrüstung dekontaminiert werden muss. Wie bereits weiter oben erwähnt, ist die räumliche Nähe der beiden Dekontaminationsmodule 14, 16 jedoch nicht erforderlich; sie können statt dessen auf Grund ihrer autarken Arbeitsfähigkeit auch räumlich und/oder zeitlich getrennt voneinander verwendet werden. Fig. 7 zeigt darüber hinaus, dass bei ungünstiger Witterung auch die persönliche Schutzbekleidung in dem An- und Auskleidezelt 54 abgelegt werden kann.

In einem besonders bevorzugten Ausführungsbeispiel beinhaltet das neue Dekontaminationssystem 10 des Weiteren eine Sprühvorrichtung 58, die in diesem Fall am vorderen Teil des Transportfahrzeuges 22 montiert werden kann. Die Sprühvorrichtung 58 ist dazu ausgebildet, den Bodenbereich vor dem Transportfahrzeug 22 mit einem Dekontaminationsmittel 60 zu besprühen. Das Dekontaminationsmittel 60 wird in dem bevorzugten Ausführungsbeispiel aus dem Dekontaminationsmodul 12 zugeführt (hier nicht gesondert dargestellt).

Die einzelnen Dekontaminationsmodule 12 bis 14 sind so ausgelegt, dass sie einen zumindest einstündigen autarken Betrieb ermöglichen. Zur Bedienung sind drei Bedienpersonen und ggf. weitere Hilfskräfte nach Bedarf erforderlich. Beim Dekontaminieren tragen die Bedienpersonen eine persönliche Schutzausrüstung, wie dies von gattungsgemäßen Systemen bekannt ist.

Um den zumindest einstündigen autarken Betrieb der einzelnen Dekontaminationsmodule bei den hier gegebenen Größenabmessungen zu ermöglichen (die einzelnen Module müssen ja einen entsprechenden Vorrat an Dekontaminationsmitteln und sonstigen Betriebsstoffen aufnehmen), wird als Dekontaminationsmittel vorzugsweise eine Substanz verwendet, die in der Patentanmeldung DE 101 12 720 A1 der vorliegenden Anmelderin beschrieben ist, auf die hier im vollen Umfang Bezug genommen wird. Alternativ hierzu ist es jedoch auch möglich, andere nichtwässrige Dekontaminationsmittel zu verwenden.

Zur Inbetriebnahme werden die einzelnen Dekontaminationsmodule an den dafür vorgesehenen Stellen eines oder mehrerer Dekontaminationsplätze mit der Kranvorrichtung 26 abgesetzt. Anschließend werden die jeweiligen Stationen entfaltet. Daraufhin kann die Dekontamination nach üblichen Vorgehensweisen erfolgen. Der Aufbau der Dekontaminationsmodule ist auf Grund des neuen Konzepts in weniger als 30 Minuten, teilweise sogar innerhalb von 20 Minuten möglich (ohne Berücksichtigung erforderlicher Transportwege zu abgesetzten Stellen). Der Abbau inklusive einer Eigendekontamination kann innerhalb von 45 bis 60 Minuten erfolgen.

## Patentansprüche

1. Mobiles Dekontaminationssystem zum Dekontaminieren von Personen und Gegenständen (32-36), mit zumindest einem ersten und einem zweiten Dekontaminationsmodul, die jeweils Einrichtungen (30, 46-54) zum Dekontaminieren von Personen und/oder Gegenständen beinhalten, wobei die Einrichtungen (30) des ersten Dekontaminationsmoduls in einem ersten transportablen Container (12) und die Einrichtungen (46-50) des zweiten Dekontaminationsmoduls in einem zweiten transportablen Container (14) angeordnet sind, **dadurch gekennzeichnet, dass** das erste und das zweite Dekontaminationsmodul jeweils mit allen erforderlichen Einrichtungen versehen sind, die einen von den jeweils anderen Dekontaminationsmodulen unabhängigen und räumlich getrennten Arbeitsbetrieb ermöglichen, so dass sie autark arbeitsfähig sind, und dass die transportablen Container (12, 14) durch Verriegelungen lösbar zu einem einheitlichen, transportablen Gesamtcontainer (18) koppelbar sind.

2. Dekontaminationssystem nach Anspruch 1, **gekennzeichnet durch** ein drittes Dekontaminationsmodul, wobei das erste Dekontaminationsmodul erste Einrichtungen (30) zum Dekontaminieren von Großgeräten (32-36) beinhaltet, wobei das zweite Dekontaminationsmodul zweite Einrichtungen (46-50) zum Dekontaminieren von Kleingeräten beinhaltet, und wobei das dritte Dekontaminationsmodul dritte Einrichtungen (52, 54) zum Dekontaminieren von Personen beinhaltet.

3. Dekontaminationssystem nach Anspruch 2, **dadurch gekennzeichnet, dass** das dritte Dekontaminationsmodul in einem dritten Container (16) angeordnet ist, der mit dem ersten und zweiten Container (12, 14) lösbar zu dem Gesamtcontainer (18) koppelbar ist.

4. Dekontaminationssystem nach Anspruch 2 oder 3, **dadurch gekennzeichnet, dass** das dritte Dekontaminationsmodul so ausgerüstet ist, dass es autark arbeitsfähig ist.

5. Dekontaminationssystem nach einem der Ansprüche 1 bis 4, **gekennzeichnet durch** ein Transportfahrzeug (22), das zum Transport des Gesamtcontainers (18) ausgebildet ist.

6. Dekontaminationssystem nach Anspruch 5, **dadurch gekennzeichnet, dass** das Transportfahrzeug (22) eine Kranvorrichtung (26) besitzt, die dazu ausgebildet ist, die transportablen Container (12-16) vom Transportfahrzeug (22) ab- bzw. auf das Transportfahrzeug (22) aufzusetzen.

7. Dekontaminationssystem nach Anspruch 6, **dadurch gekennzeichnet, dass** die Kranvorrichtung (26) einen, vorzugsweise lösbaren, Personenträger (44) beinhaltet, so dass Personen mit Hilfe der Kranvorrichtung (26) in eine erhöhte Arbeitsposition bringbar sind.

8. Dekontaminationssystem nach einem der Ansprüche 5 bis 7, **dadurch gekennzeichnet, dass** das Transportfahrzeug (22) eine Sprühvorrichtung (58) zum Besprühen eines Untergrundes besitzt, wobei zumindest eines der Dekontaminationsmodule dazu ausgebildet ist, die Sprühvorrichtung (58) mit Dekontaminationsmittel (60) zu versorgen.

9. Dekontaminationssystem nach einem der Ansprüche 1 bis 8, ferner **gekennzeichnet durch** ein viertes Dekontaminationsmodul (28), das vorzugsweise zum autarken Dekontaminieren von Innenräumen ausgebildet ist, wobei zumindest einer der Container (12-16) dazu ausgebildet ist, das vierte Dekontaminationsmodul (28) zu Transportzwecken aufzunehmen.

## Claims

1. A mobile decontamination system for decontaminating persons and objects (32 - 36), comprising at least a first and a second decontamination module, each of which including devices (30, 46 - 54) for decontaminating persons and/or objects, wherein the devices (30) of the first decontamination module are arranged in a first transportable container (12) and the devices (46 - 50) of the second decontamination module are arranged in a second transportable container (14), **characterized in that** the first and the second decontamination module each are provided with all devices required for allowing a working operation that is independent and spatially remote from the respective other decontamination modules, such that the decontamination modules are operable in a self-sustaining manner, and **in that** the transportable containers (12, 14) can be releasably coupled by locking means to form a unitary transportable overall container (18).

2. The decontamination system according to claim 1, **characterized by** a third decontamination module, wherein the first decontamination module includes first devices (30) for decontaminating giant equipment (32 - 36), wherein the second decontamination module includes second devices (46 - 50) for decontaminating small equipment, and wherein the third decontamination module includes third devices (52, 54) for decontaminating persons.

3. The decontamination system according to claim 2, **characterized in that** the third decontamination module is arranged in a third container (16) which can be releasably coupled with the first and the second container (12, 14) to form the overall container (18).

4. The decontamination system according to claim 2 or 3, **characterized in that** the third decontamination module is configured for being operable in a self-sustaining manner.

5. The decontamination system according to one of claims 1 to 4, **characterized by** a transport vehicle (22) which is configured for transporting the overall container (18).

6. The decontamination system according to claim 5, **characterized in that** the transport vehicle (22) has a crane arrangement (26) which is configured for unloading or uploading the transportable container (12 - 16) from the transport vehicle (22) or onto the transport vehicle (22).

7. The decontamination system according to claim 6, **characterized in that** the crane arrangement (26) comprises a carrier (44) for persons, which is preferably releasable, so that persons can be brought into an elevated working position by means of the crane arrangement (26).

8. The decontamination system according to one of claims 5 to 7, **characterized in that** the transport vehicle (22) has a spraying arrangement (58) for spraying a floor, wherein at least one of the decontamination modules is configured for supplying a decontamination agent to the spraying arrangement (58).

9. The decontamination system according to one of claims 1 to 8, **characterized by** a fourth decontamination module (28), which preferably is configured for decontaminating interior spaces in a self-sustaining manner, wherein at least one of the containers (12 - 16) is configured to accommodate the fourth decontamination module (28) for transportation purposes.

## Revendications

1. Système de décontamination mobile pour la décontamination de personnes et d'objets (32-36), avec au moins un premier et un deuxième modules de décontamination, qui comportent respectivement des dispositifs (30, 46-54) pour la décontamination de personnes et/ou d'objets, les dispositifs (30) du premier module de décontamination étant disposés dans un premier conteneur transportable (12) et les dispositifs (46-50) du deuxième module de décontamination étant disposés dans un deuxième conteneur transportable (14), **caractérisé en ce que** le premier et le deuxième modules de décontamination sont dotés respectivement de tous les dispositifs nécessaires, qui permettent un fonctionnement séparé dans l'espace et indépendant respectivement des autres modules de décontamination, de sorte qu'ils puissent fonctionner en autarcie, et **en ce que** les conteneurs transportables (12, 14) peuvent être couplés de manière amovible par verrouillages pour former un ensemble conteneur (18) transportable, constituant une seule unité.

2. Système de décontamination selon la revendication 1, **caractérisé par** un troisième module de décontamination, le premier module de décontamination contenant des premiers dispositifs (30) pour la décontamination de grands appareils (32-.36), le deuxième module de décontamination contenant des deuxièmes dispositifs (46-50) pour la décontamination de petits appareils et le troisième module de décontamination contenant des troisièmes dispositifs (52, 54) pour la décontamination de personnes.

3. Système de décontamination selon la revendication 2, **caractérisé en ce que** le troisième module de décontamination est disposé dans un troisième conteneur (16), qui peut être couplé de manière amovible avec le premier et le deuxième conteneur (12, 14) pour former l'ensemble conteneur (18).

4. Système de décontamination selon la revendication 2 ou 3, **caractérisé en ce que** le troisième module de décontamination est équipé de sorte à pouvoir fonctionner en autarcie.

5. Système de décontamination selon l'une quelconque des revendications 1 à 4, **caractérisé par** un véhicule de transport (22), qui est conçu pour le transport de l'ensemble conteneur (18).

6. Système de décontamination selon la revendication 5, **caractérisé en ce que** le véhicule de transport (22) dispose d'un système de grue (26), qui est réalisé pour déposer les conteneurs transportables (12-16) du véhicule de transport (22) ou les poser sur le véhicule de transport (22).

7. Système de décontamination selon la revendication 6, **caractérisé en ce que** le système de grue (26) comporte un monte-personne (44) de préférence amovible, de sorte à pouvoir amener les personnes dans une position de travail surélevée à l'aide du système de grue (26).

8. Système de décontamination selon l'une quelconque des revendications 5 à 7, **caractérisé en ce que** le véhicule de transport (22) dispose d'un dispositif de pulvérisation (58) pour pulvériser un fond, au moins un des modules de décontamination étant réalisé pour alimenter le dispositif de pulvérisation (58) en agent de décontamination (60).

9. Système de décontamination selon l'une quelconque des revendications 1 à 8, **caractérisé en outre par** un quatrième module de décontamination (28), qui est réalisé de préférence pour la décontamination en autarcie d'espaces intérieurs, au moins un des conteneurs (12-16) étant réalisé pour recevoir le quatrième module de décontamination (28) à des fins de transport.
